# EUROPÄISCHE PATENTANMELDUNG

(11) **EP 4 803 774 A1**
(43) Veröffentlichungstag der Anmeldung: **09.09.2026**
(21) Anmeldenummer: 26161641.1
(22) Anmeldetag: 02.03.2026
(51) Int. Cl.: F16F 9/14

(54) **ROTATIONSDÄMPFER MIT FLÜGELN**

(30) Priorität: 04.03.2025 CN 202520365327 U
(71) Anmelder: Oceanwell (Xiamen) Industrial Co., Ltd., Xiamen, Fujian 361000 (CN)
(72) Erfinder: PENG, Dong, Dongfu Town, Haicang Dist, Xiamen (CN); PAN, Ruixue, Dongfu Town, Haicang Dist, Xiamen (CN); ZHANG, Yongnong, Dongfu Town, Haicang Dist, Xiamen (CN)
(74) Vertreter: Rätsch, Caroline

(57) **Zusammenfassung**

Die Erfindung betrifft einen Rotationsdämpfer mit Flügeln, der eine Gehäuseeinheit und eine Welleneinheit umfasst, wobei diese beiden innerhalb der Gehäuseeinheit so zusammenwirken, dass zwei zentralsymmetrische Hochdruck-Ölkammern und zwei zentralsymmetrische Niederdruck-Ölkammern ausgebildet sind. Die beiden Hochdruck-Ölkammern sind miteinander verbunden, und die beiden Niederdruck-Ölkammern sind ebenfalls miteinander verbunden. Während des Dämpfungsvorgangs besteht kein Druckunterschied zwischen dem ersten Paar der zueinander gehörenden Hochdruck- und Niederdruck-Ölkammern und zwischen dem zweiten Paar der zueinander gehörenden Hochdruck- und Niederdruck-Ölkammern. Dadurch wird im gesamten Dämpfer ein Druckausgleich gewährleistet, wodurch Schwankungen während des Betriebs verhindert und die Lebensdauer verlängert werden.

## Beschreibung

### Technisches Gebiet

Die vorliegende Erfindung betrifft einen Dämpfer, insbesondere einen Rotationsdämpfer mit Flügeln.

### Stand der Technik

Dämpfer werden in der Sanitärbranche in großem Umfang eingesetzt, beispielsweise in Toilettensitzen, um ein langsames Herabsenken zu ermöglichen. In der Sanitärbranche werden hauptsächlich Rotationsdämpfer mit Flügeln verwendet, bei denen zwei Hochdruck- und zwei Niederdruck-Ölkammern jeweils radial achssymmetrisch angeordnet sind.

Die beiden Hochdruckkammern sind jedoch voneinander unabhängig, ebenso wie die beiden Niederdruckkammern. Während des Dämpfungsvorgangs fließt das Öl von einer Hochdruckkammer nur in eine der Niederdruckkammern, während das Öl in der anderen Hochdruckkammer ebenfalls nur in die jeweils andere Niederdruckkammer fließt. Aufgrund unterschiedlicher Drücke in den Kammern besteht jedoch ein Druckunterschied zwischen dem ersten Paar von zueinander gehörender Hochdruck- und Niederdruckkammer und dem zweiten Paar. Dies führt zu einem Ungleichgewicht des Drucks im Dämpfer während des Betriebs, was zu Schwankungen führt und den Verschleiß der Bauteile beschleunigt.

### Erfindung

Die vorliegende Erfindung stellt einen Rotationsdämpfer mit Flügeln mit internem Druckausgleich bereit, der die Mängel des Standes der Technik überwindet. Zur Lösung des technischen Problems ist die erfindungsgemäße Konstruktion wie folgt:
Ein Rotationsdämpfer mit Flügeln, der eine Gehäuseeinheit und eine Drehwelleneinheit umfasst, die so in der Gehäuseeinheit zusammenwirken, dass zwei zentralsymmetrische Hochdruck-Ölkammern und zwei zentralsymmetrische Niederdruck-Ölkammern ausgebildet sind, wobei die beiden Hochdruck-Ölkammern miteinander und die beiden Niederdruck-Ölkammern miteinander verbunden sind.

Bei einer bevorzugten Ausführungsform ist in der Welleneinheit ein Niederdruckkanal ausgebildet, wobei die beiden Niederdruck-Ölkammern über den Niederdruckkanal verbunden sind.

Bei einer bevorzugten Ausführungsform verläuft der Niederdruckkanal durch die Mitte der Welleneinheit.

Bei einer bevorzugten Ausführungsform verläuft der Niederdruckkanal radial.

Bei einer bevorzugten Ausführungsform ist in der Gehäuseeinheit ein Hochdruckkanal ausgebildet, wobei die beiden Hochdruck-Ölkammern über den Hochdruckkanal miteinander verbunden sind.

Bei einer bevorzugten Ausführungsform ist der Hochdruckkanal als Nut in einem Boden eines Innenraums der Gehäuseeinheit ausgebildet.

Bei einer bevorzugten Ausführungsform ist am Boden des Innenraums der Gehäuseeinheit ein Führungsstift ausgebildet, und am unteren Ende der Welleneinheit ist eine Führungsnut ausgebildet, wobei der Führungsstift in die Führungsnut eingreift.

Bei einer bevorzugten Ausführungsform ist zwischen dem Führungsstift und der Führungsnut ein Ölkanal ausgebildet, wobei in der Gehäuseeinheit ein Hochdruckkanal ausgebildet ist, der die beiden Hochdruck-Ölkammern miteinander verbindet und als Nut im Boden des Innenraums der Gehäuseeinheit ausgebildet ist, wobei die Nut mit der Führungsnut in Verbindung steht. An der Welleneinheit ist ein Niederdruckkanal vorgesehen, der die beiden Niederdruck-Ölkammern verbindet. An der Welleneinheit ist ein Ausgleichskanal vorhanden, der den Niederdruckkanal mit der Führungsnut verbindet. Ein Sicherungsstift ist mit einem Kopf in die Gehäuseeinheit eingeschraubt, während ein Fuß des Sicherungsstifts in die Gehäuseeinheit hineinragt, den Führungsstift und die Führungsnut durchdringt und den Ausgleichskanal verschließt.

Im Vergleich zum Stand der Technik weist diese technische Lösung folgende Vorteile auf:
1. Die beiden Hochdruck-Ölkammern sind miteinander verbunden, ebenso wie die beiden Niederdruck-Ölkammern. Während des Dämpfungsvorgangs besteht kein Druckunterschied zwischen dem ersten Paar der zueinander gehörenden Hochdruck- und Niederdruck-Ölkammern und zwischen dem zweiten Paar der zueinander gehörenden Hochdruck- und Niederdruck-Ölkammern, sodass im gesamten Dämpfer ein Druckausgleich herrscht, Schwankungen während des Betriebs vermieden werden und die Lebensdauer verlängert wird.
2. Durch die Anordnung des Niederdruckkanals an der Welleneinheit und des Hochdruckkanals an der Gehäuseeinheit wird die Festigkeit der Welleneinheit und der Gehäuseeinheit verbessert und eine Reduzierung der Druckfestigkeit des Dämpfers durch die zusätzlichen Nieder- und Hochdruckkanäle weitestgehend vermieden.
3. Normalerweise verschließt der Stift den Ausgleichskanal, sodass der Dämpfer während des Betriebs seine Dämpfungsfunktion erfüllt. Wenn der Stift geöffnet wird, kann die Hochdruck-Ölkammer über den Ausgleichskanal direkt mit der Niederdruck-Ölkammer verbunden werden, wodurch die Dämpfungswirkung ausgeschaltet wird. Dies erleichtert die Wartung und ermöglicht es zudem, die Dämpfungsfunktion des Dämpfers einfach zu deaktivieren.

### Figurenbeschreibung

Im Folgenden wird die vorliegende Erfindung anhand der beigefügten Zeichnung und der Ausführungsbeispiele näher erläutert.
Fig. 1 zeigt eine schematische axiale Schnittansicht des erfindungsgemäßen Rotationsdämpfers mit Flügeln.
Fig. 2 zeigt eine perspektivische Teilschnittansicht der Welleneinheit des in Fig. 1 dargestellten Rotationsdämpfers mit Flügeln.
Fig. 3 zeigt eine dreidimensionale schematische Darstellung der Gehäuseeinheit des in Fig. 1 gezeigten Rotationsdämpfers mit Flügeln.
Fig. 4 zeigt eine schematische Radialschnittansicht des in Fig. 1 dargestellten Rotationsdämpfers mit Flügeln im Niederdruckkanal.
Figur 5 zeigt eine schematische Schnittansicht der beiden miteinander verbundenen Hochdruck-Ölkammern des in Figur 1 gezeigten Rotationsdämpfers mit Flügeln.

### Ausführungsbeispiel

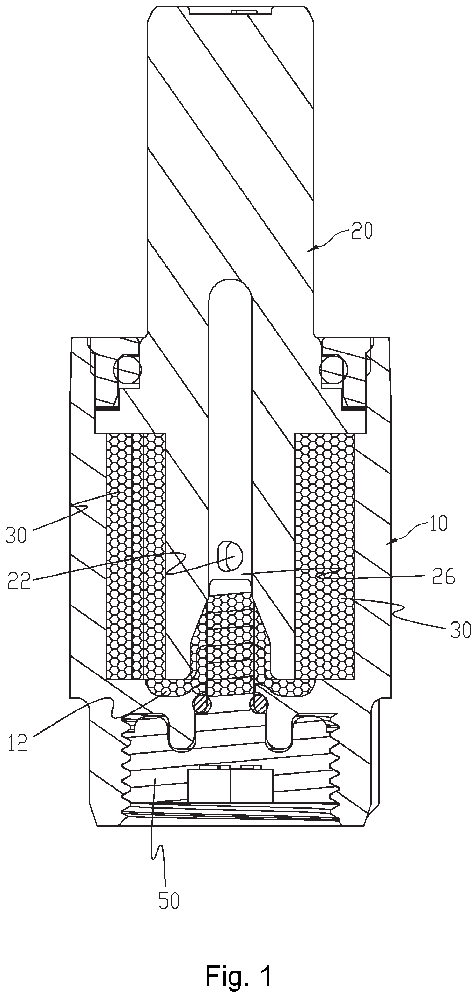

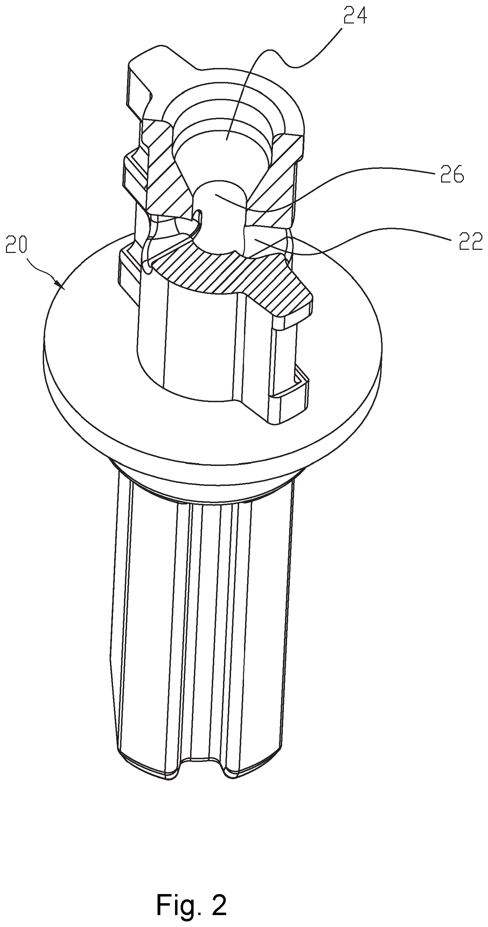

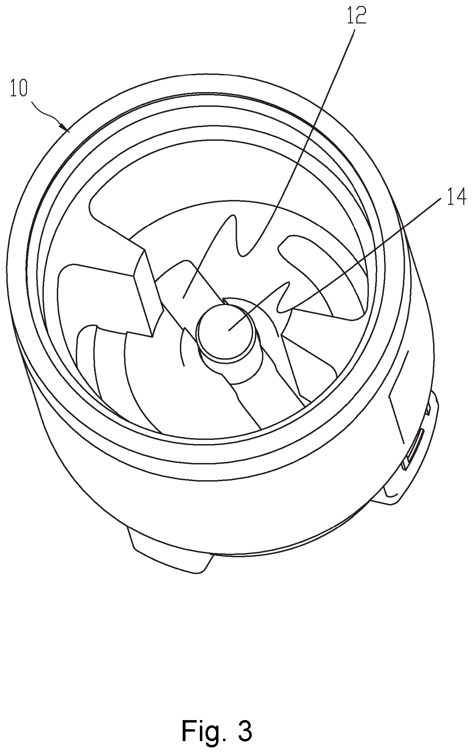

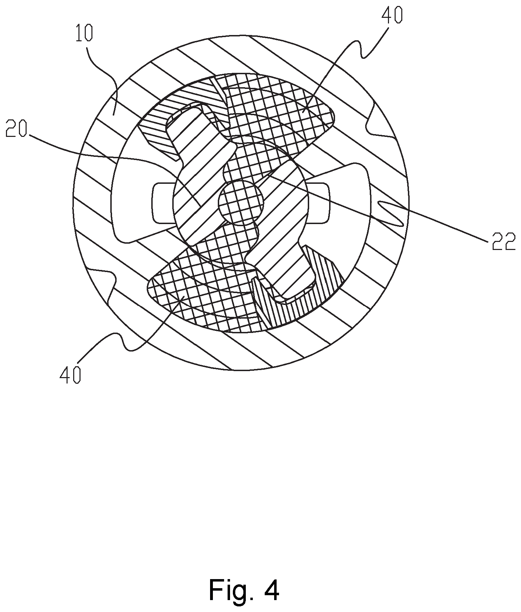

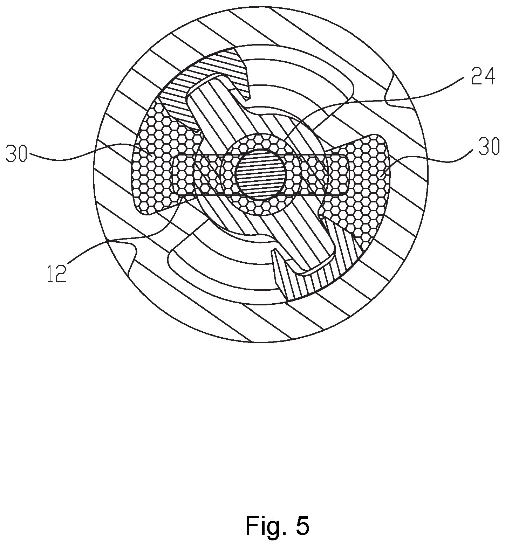

Unter Bezugnahme auf die Figuren 1 bis 5 umfasst der Rotationsdämpfer mit Flügeln eine Gehäuseeinheit 10 und eine Welleneinheit 20, die so in der Gehäuseeinheit zusammenwirken, dass zwei zentralsymmetrische Hochdruck-Ölkammern 30 und zwei zentralsymmetrische Niederdruck-Ölkammern 40 ausgebildet sind. Die Ausgestaltung sowie die Funktionsweise der Hochdruck-Ölkammern sind aus dem Stand der Technik bekannt. Ein erfinderischer Aspekt dieser Lösung besteht darin, dass die beiden Hochdruck-Ölkammern 30 und die beiden Niederdruck-Ölkammern 40 miteinander verbunden sind. Fachleute auf diesem Gebiet wissen, dass "Verbindung" einen Verbindungskanal bezeichnet, bei dem es sich nicht um Passspalte zwischen den Bauteilen handelt. Beispielsweise ist bei bekannten Konstruktionen der Verbindungskanal zwischen der Hochdruck- und der Niederdruck-Ölkammer geöffnet, während sich die Welleneinheit in Richtung Niederdruck-Ölkammer dreht. Daher kann das Öl aus der Niederdruck-Ölkammer schnell über den Verbindungskanal in die Hochdruckölkammer gelangen. Wenn sich die Welleneinheit in Richtung der Hochdruckölkammer dreht, ist der Verbindungskanal zwischen der Hochdruck- und der Niederdruck-Ölkammer geschlossen. Folglich sind die Hochdruck- und die Niederdruck-Ölkammer nicht miteinander verbunden, sodass das Öl aus der Hochdruck-Ölkammer nur langsam durch die Spalten zwischen den Bauteilen in die Niederdruck-Ölkammer gelangen kann. Da erfindungsgemäß die beiden Hochdruck-Ölkammern 30 und die beiden Niederdruck-Ölkammern 40 miteinander verbunden sind, ist der Druck in den beiden Hochdruck-Ölkammern 30 während des Dämpfungsvorgangs gleich, wodurch im gesamten Dämpfer die Kräfteverteilung Kräfte ausgeglichen sind.

Vorzugsweise ist an der Welleneinheit 20 ein Niederdruckkanal 22 vorgesehen, wobei die beiden Niederdruck-Ölkammern 40 über den Niederdruckkanal 22 verbunden sind. Vorzugsweise verläuft der Niederdruckkanal 22 durch die Mitte der Welleneinheit 20, d. h. der Niederdruckkanal 22 geht unmittelbar durch die Welleneinheit hindurch. Bei dieser Ausführungsform verläuft der Niederdruckkanal 22 radial und weist daher die kürzeste Länge auf.

Vorzugsweise ist in der Gehäuseeinheit 10 ein Hochdruckkanal 12 ausgebildet, wobei die beiden Hochdruck-Ölkammern 30 über den Hochdruckkanal 12 miteinander verbunden sind. Insbesondere kann der Hochdruckkanal 12 als Nut in einem Boden eines Innenraums der Gehäuseeinheit 10 ausgebildet sein.

Vorzugsweise ist am Boden des Innenraums der Gehäuseeinheit 10 ein Führungsstift 14 ausgebildet, und am unteren Ende der Welleneinheit 20 ist eine Führungsnut ausgebildet, wobei der Führungsstift in die Führungsnut eingreift.

Vorzugsweise ist zwischen dem Führungsstift und der Führungsnut ein Ölkanal ausgebildet, wobei der Hochdruckkanal 12 mit der Führungsnut 24 verbunden ist, wobei an der Welleneinheit 20 ein Ausgleichskanal 26 vorgesehen ist, der den Niederdruckkanal 22 mit der Führungsnut 24 verbindet, und wobei ein Sicherungsstift 50 mit einem Kopf in die Gehäuseeinheit 10 geschraubt ist, während ein Fuß in die Gehäuseeinheit hineinragt, den Führungsstift und die Führungsnut durchdringt und den Ausgleichskanal 26 verschließt. Wenn also der Sicherungsstift 50 gelöst wird, um den Ausgleichskanal 26 zu öffnen, dann strömt während des Dämpfungsvorgangs, d. h. während der Kompression der Hochdruck-Ölkammer, das Öl aus der Hochdruck-Ölkammer schnell nacheinander durch den Hochdruckkanal 12, den Ölkanal, den Ausgleichskanal 26 und den Niederdruckkanal 22 in die Niederdruck-Ölkammer 40.

Vorstehend wurden lediglich vorteilhafte Ausführungsbeispiele der Erfindung beschrieben, ohne dass diese eine Beschränkung des Umfangs der Erfindung bedeuten. Im Umfang der vorliegenden Erfindung und dem Inhalt der Beschreibung liegende äquivalente Modifikationen oder Ausgestaltungen fallen sämtlich unter den Schutzumfang der vorliegenden Erfindung.

## Patentansprüche

1. Rotationsdämpfer mit Flügeln, aufweisend eine Gehäuseeinheit und eine Welleneinheit, die zusammen in der Gehäuseeinheit zwei zentralsymmetrische Hochdruck-Ölkammern und zwei zentralsymmetrische Niederdruck-Ölkammern bilden, **dadurch gekennzeichnet, dass** die beiden Hochdruck-Ölkammern miteinander verbunden sind und die beiden Niederdruck-Ölkammern miteinander verbunden sind.

2. Rotationsdämpfer mit Flügeln gemäß Anspruch 1, **dadurch gekennzeichnet, dass** in der Welleneinheit ein Niederdruckkanal ausgebildet ist, wobei die beiden Niederdruck-Ölkammern über den Niederdruckkanal miteinander verbunden sind.

3. Rotationsdämpfer mit Flügeln gemäß Anspruch 2, **dadurch gekennzeichnet, dass** der Niederdruckkanal durch die Mitte der Welleneinheit verläuft.

4. Rotationsdämpfer mit Flügeln nach Anspruch 3, **dadurch gekennzeichnet, dass** der Niederdruckkanal radial verläuft.

5. Rotationsdämpfer mit Flügeln nach Anspruch 1, **dadurch gekennzeichnet, dass** in der Gehäuseeinheit ein Hochdruckkanal ausgebildet ist, wobei die beiden Hochdruck-Ölkammern über den Hochdruckkanal miteinander verbunden sind.

6. Rotationsdämpfer mit Flügeln gemäß Anspruch 5, **dadurch gekennzeichnet, dass** der Hochdruckkanal als Nut in einem Boden eines Innenraums der Gehäuseeinheit ausgebildet ist.

7. Rotationsdämpfer mit Flügeln gemäß Anspruch 1, **dadurch gekennzeichnet, dass** an einem Boden eines Innenraums der Gehäuseeinheit ein Führungsstift ausgebildet ist, wobei am unteren Ende der Welleneinheit eine Führungsnut ausgebildet ist und wobei der Führungsstift in die Führungsnut eingreift.

8. Rotationsdämpfer mit Flügeln nach Anspruch 7, **dadurch gekennzeichnet, dass** zwischen dem Führungsstift und der Führungsnut ein Ölkanal ausgebildet ist, wobei in der Gehäuseeinheit ein Hochdruckkanal ausgebildet ist, der die beiden Hochdruck-Ölkammern miteinander verbindet, wobei der Hochdruckkanal als Nut im Boden des Innenraums der Gehäuseeinheit ausgebildet ist, wobei die Nut mit der Führungsnut in Verbindung steht, wobei an der Welleneinheit ein Niederdruckkanal vorgesehen ist, der die beiden Niederdruckölkammern miteinander verbindet, wobei an der Welleneinheit ein Ausgleichskanal vorgesehen ist, der den Niederdruckkanal mit der Führungsnut verbindet, und wobei ein Sicherungsstift mit einem Kopf in die Gehäuseeinheit eingeschraubt ist, während ein Fuß in die Gehäuseeinheit hineinragt, den Führungsstift und die Führungsnut durchdringt und den Ausgleichskanal verschließt.
